**Europäisches Patentamt**

**European Patent Office**

**Office européen des brevets**

(19)

(11) Veröffentlichungsnummer : **0 391 391 B1**

(12)

# EUROPÄISCHE PATENTSCHRIFT

(45) Veröffentlichungstag der Patentschrift :
**04.11.92 Patentblatt 92/45**

(51) Int. Cl.$^5$: **B60R 13/08,** B60K 11/08,
B60T 5/00

(21) Anmeldenummer : **90106441.0**

(22) Anmeldetag : **04.04.90**

(54) **Kraftfahrzeug mit einem gekapselten Motorraum.**

(30) Priorität : **07.04.89 DE 3911349**

(43) Veröffentlichungstag der Anmeldung :
**10.10.90 Patentblatt 90/41**

(45) Bekanntmachung des Hinweises auf die
Patenterteilung :
**04.11.92 Patentblatt 92/45**

(84) Benannte Vertragsstaaten :
**FR GB IT**

(56) Entgegenhaltungen :
**BE-A- 389 358**

(56) Entgegenhaltungen :
**DE-A- 3 815 394**
**DE-C- 534 173**
**DE-C- 738 847**
**FR-A- 2 402 768**
**FR-A- 2 616 403**
**GB-A- 440 298**
**US-A- 1 630 342**

(73) Patentinhaber : **DAIMLER-BENZ
AKTIENGESELLSCHAFT
Mercedesstrasse 136
W-7000 Stuttgart 60 (DE)**

(72) Erfinder : **Weidmann, Werner, Dipl.-Ing.
Brückenstrasse 43
W-7056 Weinstadt 3 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Kraftfahrzeug mit einem gekapselten Motorraum zur Aufnahme einer aus einer Brennkraftmaschine mit einem Getriebe bestehenden Antriebseinheit gemäß den weiteren im Oberbegriff des Patentanspruchs 1 angegebenen Merkmalen.

Das Dokument BE-A-389 358 zeigt ein Fahrzeug mit einer Motorkapsel entsprechend den im Oberbegriff des Anspruchs 1 angegebenen Merkmalen. In den seitlichen Wänden der Motorkapsel sind Austrittsöffnungen für die Kühlluft aus dem Raum mit dem Kühlerblock und aus dem Raum mit der Brennkraftmaschine und dem Getriebe vorgesehen. Durch diese jeweils direkt nach außen führenden Austrittsöffnungen ist eine seitliche Abstrahlung des Schalles aus den Räumen gegeben und damit eine bestmögliche Dämpfung von Geräuschen nicht erreichbar. Dagegen besitzt die erfindungsgemäße Motorkapsel keine seitlichen Austrittsöffnung.

Aufgabe der Erfindung ist es daher, bei einem Kraftfahrzeug der gattungsgemäßen Bauart die Motorkapsel derart zu verbessern, daß während der Fahrt eine gute Kühlung des Antriebsaggegates bzw. von Teilen des Aggregates durch den Fahrtwind erzielt wird, ohne die akustische Wirkung der Kapsel zu reduzieren.

Die Aufgabe ist erfindungsgemäß durch die im Kennzeichen des Patentanspruchs 1 angegebenen Merkmale gelöst.

Durch die Erfindung wird eine gezielte Kühlung des Antriebsaggregates (temperaturkritische Bauteile oder Kühlerdurchströmung) durch den Fahrtwind ohne Verminderung der geräuschdämpfenden Wirkung der Motorkapsel erreicht. Maßgebend hierfür ist, daß die Belüftungsöffnungen in der Innenschale des Bodenteiles nach außen durch die Außenschale abgedeckt sind, sowie durch die Anordnung und Ausführung der Belüftungsöffnungen in der Innenschale bereits ein direkter Schallaustritt verhindert wird.

Weitere Ausgestaltungen der Erfindung sind Gegenstand der Unteransprüche.

In der Zeichnung sind Ausführungsbeispiele der Erfindung dargestellt. Es zeigt:

Figur 1 in einem schematischen Längsschnitt ein Kraftfahrzeug mit einem gekapselten Motorraum sowie einem doppelwandigen Bodenteil,

Figur 2 das doppelwandige Bodenteil in einem Querschnitt gemäß der Linie II-II aus Figur 1 und

Figur 3 ein Kraftfahrzeug mit einem gekpaselten Motorraum, und einer zum Lüfter hin angeordneten Trennwand in einem schematischen Längsschnitt.

Ein Kraftfahrzeug 1 besitzt einen im Fahrzeugbug angeordneten Motorraum 2 in dem das aus einer Brennkraftmaschine 3 und einem nachgeschalteten Getriebe 4 bestehende Antriebsaggregat 5 gelagert ist. In Fahrtrichtung gesehen ist vor der Brennkraftmaschine 3 ferner innerhalb des Motorraumes 2 ein Kühlerblock 6 angeordnet, dem Kühlluft durch einen nicht weiter dargestellten Kühlergrill 7 zugeführt werden kann. Mit 8 ist eine am vorgeren Ende des Kraftfahrzeuges 1 angeordnete Stoßstange bezeichnet. Der Motorraum 2 wird nach oben durch eine Motorhaube 9, nach den Seiten hin durch nicht weiter dargestellte Karosseriewände und zur Fahrbahn hin durch ein Bodenteil 10 nach außen verschlossen. Zur Dämpfung von Geräuschen können die den Motorraum begrenzenden Karosseriewände mit einem geräuschdämpfenden Material belegt sein.

Gemäß der Erfindung ist das Bodenteil 10 doppelwandig ausgebildet und besteht aus einer Innenschale 11 und einer beabstandet von dieser angeordneten Außenschale 12. Der hierdurch zwischen der Innenschale 11 und der Außenschale 12 gebildete Raum dient als Luftführungskanal 13, der bis auf Belüftungsöffnungen 14 in der Innenschale 11 und einer Lufteintrittsöffnung 15 verschlossen ist. Die Eintrittsöffnung 15 befindet sich an der Frontseite des Kraftfahrzeuges 1 unterhalb der Stoßstange 8 und erstreckt sich beispielsweise über die gesamte Breite der Karosserie.

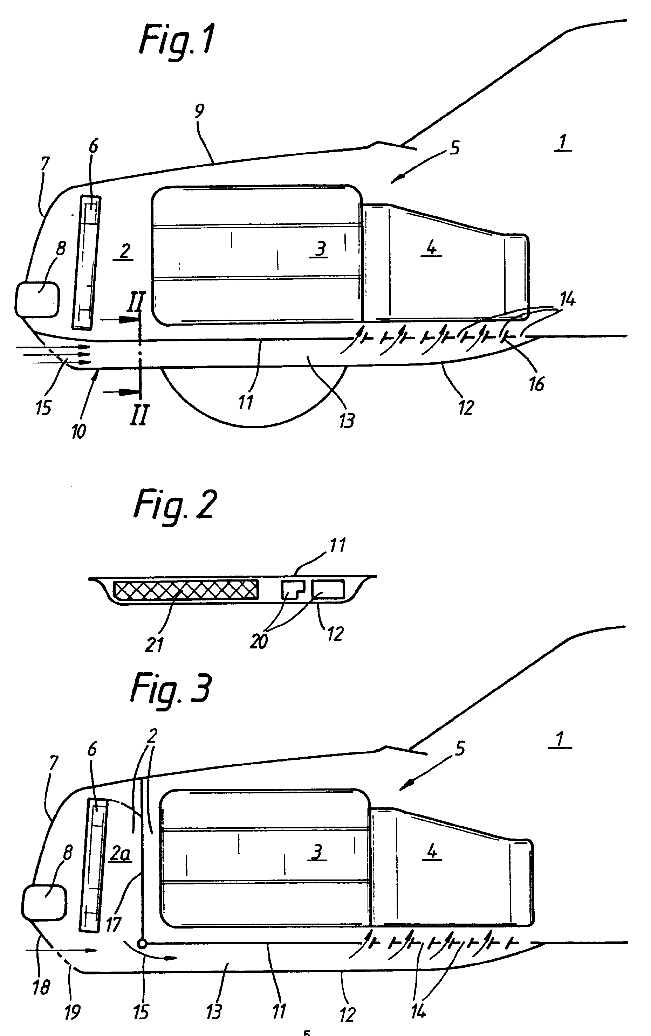

Während der Fahrt des Kraftfahrzeuges tritt der Fahrtwind durch die Lufteintrittsöffnung 15 in den sich in Längsrichtung unterhalb des Motorraumes erstreckenden Luftführungskanal 13 ein und wird durch die Belüftungsöffnungen 14 in den Motorraum 2 abgeleitet. Die Belüftungsöffnungen 14 sind mit besonderen Luftleitflächen 16 versehen, durch die eine gezielte Umlenkung der Luft aus dem Luftführungskanal 13 in den Motorraum 2 erzielt wird, dabei jedoch ein direkter Schallaustritt verhindert wird. Desweiteren sind die Belüftungsöffnungen 14 an solchen Stellen der Innenschale 11 vorgesehen, daß eine direkte Anströmung des gesamten Aggregates 5 oder nur einzelner Teile des Aggregates mit Frischluft aus dem Luftführungskanal 13 gegeben ist. Im Ausführungsbeispiel der Figur 1 sind die Belüftungsöffnungen 14 in dem das Getriebe 4 abdeckenden Bereich der Innenschale 11 vorgesehene, so daß die aus den Belüftungsöffnungen 14 austretende Frischluft unmittelbar das Getriebegehäuse 4 umströmen kann und somit eine direkte Kühlung des Getriebes 4 erzielt wird.

Aus Figur 2 ist zu erkennen, daß die Außenschale 12 an ihrem Randbereich nach oben zur Innenschale 11 hin umgebogen ist und mit dieser zur Bildung eines geschlossenen Luftführungskanales 13 in geeigneter Weise verbunden ist. Beispielhaft ist der Einbau von temperaturkritischen Bauteilen (20) und die Anordnung eines Kühlers (21) dargestellt.

Das Ausführungsbeispiel der Figur 3 unterscheidet sich von demjenigen der Figur 1 darin, daß im gekapselten Motorraum 2 zwischen der Brennkraftmaschine 3 und dem Kühlerblock 6 eine quer verlaufende Trennwand 17 eingezogen ist, und daß die Innenschale 14 von der Trennwand 17 ausgehend sich in Längsrichtung des Fahrzeuges bis zum rückwärtigen Ende des Motorraumes erstreckt. Hierdurch wird die Lufteinströmöffnung 15 des Luftführungskanals 13 in die Ebene der Trennungswand 17 verlagert. In der sich unterhalb der Stoßstange 8 in Richtung Fahrbahn hin erstreckenden Bugschürze 18 ist eine Frischluftöffnung 19 angeordnet, durch die während der Fahrt Frischluft in den Raum 2a einströmt, welche sich dort mit der stromab des Kühlerblockes 6 abfließenden erwärmten Kühlluft vermischt und welche anschließend als Kühlluft für das Aggregat 5 durch die Einströmöffnung 15 in den Luftführungskanal 13 einströmt.

Im Rahmen der Erfindung ist es möglich, daß weitere Belüftungsöffnungen seitlich in der Außenschale im Bereich der Vorderräder zur Belüftung bzw. Kühlung der Vorderradbremsen angeordnet sind.

Auch ist es denkbar, daß an den Wänden des Motorraumes 2 zur Kühlung einzelner Aggregateteile verschiedene Luftführungsschachte mit je einer vom Fahrtwind beaufschlagten Lufteintrittsöffnung und mindestens einer auf das zu kühlende Aggregat gerichteten Austrittsöffnung angeordnet sind.

**Patentansprüche**

1. Kraftfahrzeug (1) mit einem gekapselten Motorraum (2) zur Aufnahme einer aus einer Brennkraftmaschine (3) mit einem Kühlerblock (6) sowie einem Getriebe (4) bestehenden Antriebseinheit (5), wobei der Motorraum (2) begrenzt ist nach vorne in Fahrrichtung durch einen Kühlergrill (7), eine unterhalb des Kühlergrills (7) angeordnete Stoßstange (8) und einer unter dieser sich erstreckenden Bugschürze (18), nach beiden Seiten hin durch Karosseriewände, nach oben durch eine Motorhaube (9) und zur Fahrbahn hin durch einen als doppelwandiges Bodenteil (10) mit einer Innenschale (11) und einer Außenschale (12) ausgebildeten Luftführungskanal (13), der eine Eintrittsöffnung (15) und im Bereich des Getriebes (4) in der Innenschale (11) angeordnete und in den Motorraum (2) mündende Belüftungsöffnungen (14) aufweist, und wobei der Motorraum (2) zwischen Kühlerblock (6) und Brennkraftmaschine (3) durch eine querverlaufende Trennwand (17) in einen Raum (2a) für den Kühlerblock (6) und einen Raum für die Brennkraftmaschine (3) und das Getriebe (4) unterteilt ist, **dadurch gekennzeichnet,**
   - daß die Trennwand (17) bis zur Innenschale (11) reicht,
   - daß die Innenschale (11) von der Trennwand (17) ausgeht,
   - daß in der Bugschürze (18) eine Frischluftöffnung (19) angeordnet ist,
   - und daß zur Einleitung von Frischluft und erwärmter Kühlluft aus dem Raum (2a) in den Luftführungskanal (13) die Eintrittsöffnung (15) in der Ebene der Trennwand (17) angeordnet ist.

2. Kraftfahrzeug nach Anspruch 1, **dadurch gekennzeichnet,** daß in der Außenschale (12) seitlich im Bereich der Vorderräder auf die Bremsanlage gerichtete Austrittsöffnungen angeordnet sind, die zur Kühlung der Bremsanlage dienen.

3. Kraftfahrzeug nach Anspruch 1 oder 2, **dadurch gekennzeichnet,** daß in dem Raum zwischen Innenschale (11) und Außenschale (12) zu kühlende Bauteile (20) oder Kühler (21) (Öl-, Ladeluft-, Wasserkühler angeordnet sind.

**Claims**

1. Motor vehicle (1) with an enclosed engine space (2) to house a drive unit (5) consisting of an internal cmbustion engine (3) with a cooling unit (6) as well as a set of gears (4), the engine space (2) being delimited forward in the direction of travel by a radiator grille (7),by a fender (8) mounted under the radiator grille (7) and a front apron (18) extending under the latter, towards both sides by body walls, upwards by an engine hood (9) and towards the roadway by means of an air duct (13) formed as a double wall bottom part (10) with an inner Shell (11) and an outer shell (12) which has an inlet opening (15) and ventilation openings (14) mounted in the region of the set of gears (4) in the inner shell (11) and opening out into the engine space (2), and the engine space (2) between the cooling unit (6) and the internal combustion engine (3) being divided by a transversely extending partition (17) into a space (2a) for the cooling unit (6) and a space for the internal combustion engine (3) and the set of gears (4), characterized in that
   - the partition (17) extends as far as the inner shell (11);
   - the inner shell (11) extends from the partition (17);
   - a fresh air opening (19) is provided in the front apron (18);
   - and for the ducting of fresh air and warmed cooling air from the space (2a) into the air duct (13) the inlet opening (15) is provided in the plane of the partition (17).

**2.** Motor vehicle according to claim 1, characterized in that in the outer shell (12) outlet openings for the cooling of the braking installation are provided laterally in the region of the front wheels, directed towards the braking installation.

**3.** Motor vehicle according to either claim 1 or 2, characterized in that, mounted in the space between inner shell (11) and outer shell (12) are units (20) to be cooled, or coolers (21) (oil, charge air, water coolers).

**Revendications**

**1.** Véhicule automobile (1) à compartiment moteur (2) encapsulé, en vue de loger un ensemble de propulsion (5) composé d'un moteur à combustion interne (1) avec un bloc radiateur (6), ainsi qu'une boîte de vitesse (4), où le compartiment moteur (2) est délimité, vers l'avant dans le sens de déplacement, au moyen d'une grille de radiateur (7), d'un pare-choc (8) disposé au-dessous de la grille de radiateur (7) et d'un tablier de proue (18) s'étendant au-dessous du pare-choc (8), est délimité des deux côtés au moyen des parois de la carrosserie, vers le haut au moyen d'un capot moteur (9) et vis-à-vis de la piste de roulement au moyen d'un canal de guidage d'air (13), réalisé sous forme de partie de fond (10) à double paroi comportant une coque intérieure (11) et une coque extérieure (12) et présente une ouverture d'entrée (15) et, dans la zone de la boîte de vitesse (4), des ouvertures d'aération (14) disposées dans la coque intérieure (11) et débouchant dans le compartiment moteur (2), et où le compartiment moteur (2) est subdivisé, entre le bloc radiateur (6) et le moteur à combustion interne (3), au moyen d'une paroi de séparation (17) transversale, en formant un espace (2a) pour le bloc radiateur (6) et un espace pour le moteur à combustion interne (2) et la boîte de vitesse (4), caractérisé en ce que

    - la paroi de séparation (17) arrive jusqu'à la coque intérieure (11),
    - la coque intérieure (11) part de la paroi de séparation (17),
    - une ouverture d'air frais (19) est disposée dans le tablier de proue (18),
    - et l'ouverture d'entrée (15) servant à l'introduction d'air frais et d'air de refroidissement réchauffé provenant de l'espace (2a) dans le canal de guidage d'air (13) est disposée dans le plan de la paroi de séparation (17).

**2.** Véhicule automobile selon la revendication 1, caractérisé en ce que des ouvertures de sortie, servant au refroidissement des garnitures de frein, sont disposées dans la coque extérieure (12), latéralement, dans la zone des roues avant et orientées en direction de l'installation de freinage.

**3.** Véhicule automobile selon la revendication 1 ou 2, caractérisé en ce que des éléments de construction (20) ou des radiateurs (21) (radiateurs à l'huile, à air de suralimentation, à eau) devant être refroidis sont disposés dans l'espace situé entre la coque intérieure (11) et la coque extérieure (12).

# Fig.1

# Fig.2

# Fig.3